Europäisches Patentamt

European Patent Office

Office européen des brevets

(19)

(11) **EP 1 158 454 A2**

(12) **EUROPEAN PATENT APPLICATION**

(43) Date of publication:
**28.11.2001 Bulletin 2001/48**

(51) Int Cl.[7]: **G06K 9/80**

(21) Application number: **01304599.2**

(22) Date of filing: **24.05.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventors:<br>• **Hiraga, Masaki**<br>  **Tokyo (JP)**<br>• **Shinagawa, Yoshihisa**<br>  **Tokyo (JP)** |
| (30) Priority: **24.05.2000 US 576972** | (74) Representative: **Turner, James Arthur et al**<br>**D. Young & Co.,**<br>**21 New Fetter Lane**<br>**London EC4A 1DA (GB)** |
| (71) Applicant: **Monolith Co., Ltd.**<br>**Tokyo 106-0045 (JP)** | |

(54) **Object shape exploration using topology matching**

(57) An analyzer (10) inputs a 3D representation of an object such as merchandise. The structural graph of the object is constructed by defining a continuous function on the surface, which is then partitioned into plural areas according to the function values at the points on the surface. The areas are associated with nodes of the graph. By choosing a function that returns values invariant to rotation of the objects, the constructed graph also becomes invariant to rotation. The analyzer (10) is applicable to search engines for online shopping, where a user seeks goods by designating the general shape of the target.

Fig. 16

Printed by Jouve, 75001 PARIS (FR)

EP 1 158 454 A2

**Description**

This invention relates to object shape analysis and exploration or search, and especially to a method and apparatus for coding three dimensional (3D) or higher dimensional objects for the previously mentioned purposes. This invention may be applied to managing and searching of objects, which may be representations of merchandise, in object shape databases.

In recent years, techniques for modeling and digitizing have made the construction of 3D shapes much easier. It is thus more important to be able to efficiently search for 3D objects in databases for electronic commerce and the like. Recent research conducted by a private organization in the United States showed that in online shopping, a 3D representation of merchandise leads to an increase in sales of several times, compared to a representation made in 2D or still pictures.

The increasing accumulation of available 3D models on the Internet and otherwise, has highlighted the need for development of a technique for searching for a particular object or similar objects from a large dataset.

When dealing with 2D images, methods have been proposed for recognizing a silhouette using properties of the shape, such as curvature, or using properties of the image, such as color or texture. These techniques are used in 2D multimedia databases, for example in "The Query By Image and Video Content: The QBIC System", M.Flickner, H.Sawhney, W.Niblack, J.Ashley, Q.Huang, B.Dom, M.Gorkani, J.Hafner, D.Lee, D.Petkovic, D.Steele and P. Yanker. IEEE Computer, Vol.28, No.9, pp.23-32, September 1995, and in "Fast Multiresolution Image Querying", C.Jacobs, A. Finkelsten and D.Salesin, Proc. SIGGRAPH'95, pp.277-286.

In the area of 3D shapes, methods using curvature distribution of the surface provide good results when determining the general shape and its pose, for example in "The Complex EGI: New Representation for 3-D Pose Determination", S.Kang and K.Ikeuchi, IEEE Trans. PAMI, Vol. 15, No. 7, pp. 707-721, July 1993. There are also methods for matching an incomplete object from a limited view with a complete 3D model in a database, for example in "A Spherical Representation for Recognition of Free-form Surfaces", M.Hebert, K.Ikeuchi and H.Delingette, IEEE Trans. PAMI, Vol.17, No.7, pp.681-690, 1995.

These methods can be computationally intensive, relatively slow and sensitive to noise and small undulations.

Various respective aspects and features of the invention are defined in the appended claims.

The present invention has been made in view of the foregoing circumstance and embodiments thereof can provide a shape exploration technique to solve the above problems.

Embodiments of the present invention are to provide a technique achieving effective searching for a 3D object in databases and so forth.

Embodiments of the present invention are also to provide a technique to search for a 3D object with a relatively small computational cost.

Embodiments of the present invention are also to provide a relatively noise insensitive technique to search for a 3D object.

Embodiments of the present invention are also to provide a technique to effectively code a 3D object to serve, for example, the above objects.

Embodiments of the present invention are also to provide a technique to effectively code arbitrary dimensional objects.

According to one aspect of the present invention, a shape analyzer is provided. This analyzer comprises an interface through which three-dimensional data representing shape of an object is received, a point set generator which defines a plurality of points to be processed on the received three-dimensional data, an evaluator which obtains Morse values of a Morse function at the defined points, the Morse function selected such that it becomes invariant to a predetermined geometric operation on the object; and a graph generator which constructs a global topological graph of the three-dimensional data based on the obtained Morse values.

A Morse function is originally defined as a continuous function whose critical points are all non-degenerate. In this specification, however, the Morse function is a function used to detect characteristics of the shapes and the degeneracy is not questioned. Moreover, even when a certain function has a degenerate critical point, it is known that the function can be converted into a Morse function by slightly changing it. In a height function, for example, degenerate critical points disappear by marginally changing the height axis direction.

"Morse value" is the value of the Morse function at the point in question. A "global topological graph" is meant to exclude extraordinary local topology such as the connectivity of the vertices in polygonal data. The "global topological graph" focuses more on the global structure of the object.

In this aspect, the constructed global topological graph becomes invariant to predetermined geometric operations such as rotation, translation and/or other operations, for example, in Affine transform. This feature is suitable for indexing objects, as the same object will have the same graph even when the object is rotated or the like. It will be convenient for object search if the Morse function is also insensitive to deformations of the object, as the same object with different posture and the like can have the same graph.

The topological graph may comprise nodes and edges connecting the nodes. The nodes may be given to each region of the object. In a particular case, the nodes may be given to the discrete points that are critical with regard to the Morse values or the Morse function.

The shape analyzer may further comprise a processor that calculates similarity of a first global topological graph of a first object and a second global topological graph of a second object, each of which are constructed by the graph generator, based on a predetermined similarity criterion. This feature helps to search for a similar shape in databases and so on.

According to another aspect of the present invention there is provided a shape analyzer that comprises a graph generator that constructs a plurality of resolutional levels of a global topological graph of the object, based on topological computation of the three-dimensional data. The constructed graph may be used for matching two objects based on a coarse to fine strategy.

According to still another aspect of the present invention there is provided a shape analyzer that comprises a graph interface which inputs a global topological graph of three-dimensional data representing a shape of an object, a work memory which stores a first global topological graph of a first object and a second global topological graph of a second object input via the graph interface; and a processor which calculates similarity of the first and second global topological graphs stored in the memory based on a predetermined similarity criterion.

In order to evaluate the similarity, the processor may detect correspondence between elements of the first and the second global topological graphs and calculate the degree of matching between the detected corresponding elements, for example, between an attribute of the detected corresponding nodes. The attributes may be area, density of nodes, especially those included in a finer resolution level of the graph, and so on, associated with each of the nodes. The attribute may be insensitive to a predetermined geometric operation, for example, scaling on the global topological graph.

According to yet another aspect of the present invention there is provided a shape analyzer, which comprises a graph generator that constructs a global topological graph of an object by partitioning the three-dimensional data into a plurality of regions based on values of the Morse function, and by associating the regions with nodes of the graph.

It should be noted that the mentioned aspects of the shape analyzer have corresponding shape analysis methods, which form another part or aspect of the present invention.

Yet still another aspect of the present invention is a network system having a server, a database and at least one user terminal. The network may be wireless. The database stores merchandise and the global topological graphs of the shapes of the merchandise. The server, by accessing the database, evaluates with a matching program installed therein the degree of matching of the shapes of the merchandise.

In this configuration, when the user terminal electrically informs the server of the merchandise a user of the terminal is interested in, the server searches the database seeking merchandise therein which has a relatively high degree of matching with the informed merchandise, and sends the sought merchandise to the terminal. Thus when the user finds, for example, a candidate for purchasing, the user can request the server to search for other candidates that are similar in shape to the first candidate.

The above aspects and elements thereof can be combined and/or replaced with each other where such a combination and/or replacement is technically reasonable. The aspects or functions of the shape analysis above can be implemented as a hardware device as a whole, partly by hardware and partly by software, or as a computer program as a whole. The portion realized by the program can be stored in a computer-readable medium.

Finally, the present invention is applicable to data with more than three dimensions, as the basic operation for such data is an extension of the case of three-dimensional data. For n-dimensional data, "shape" is defined by the n-dimensions. The present invention is also applicable to such higher dimensional data.

The invention will be now described by way of example with reference to the accompanying drawings, throughout which like parts are referred to by like references, and in which:

Fig. 1 shows a torus and its Reeb graph.
Figs. 2a, 2b and 2c show an object and its multiresolutional Reeb graphs (MRG).
Figs. 3a and 3b show examples of 3D objects.
Figs. 4a and 4b show the correction of a geodesic Morse function.
Figs. 5a, 5b, 5c, 5d and 5d show the procedure for resampling and subdividing mesh data.
Figs. 6a and 6b show the generation of a short-cut edge.
Fig. 7 shows the procedure of Dijkstra's approach.
Figs. 8a, 8b, 8c and 8d show the construction of the Reeb graph of an object.
Figs. 9a and 9b show the matching of nodes in Reeb graphs.
Figs. 10a and 10b show the sensitivity of partitioning the object around a region boundary.
Fig. 11 shows the procedure of calculating a value representing the difference of genus at each level between two MRGs.

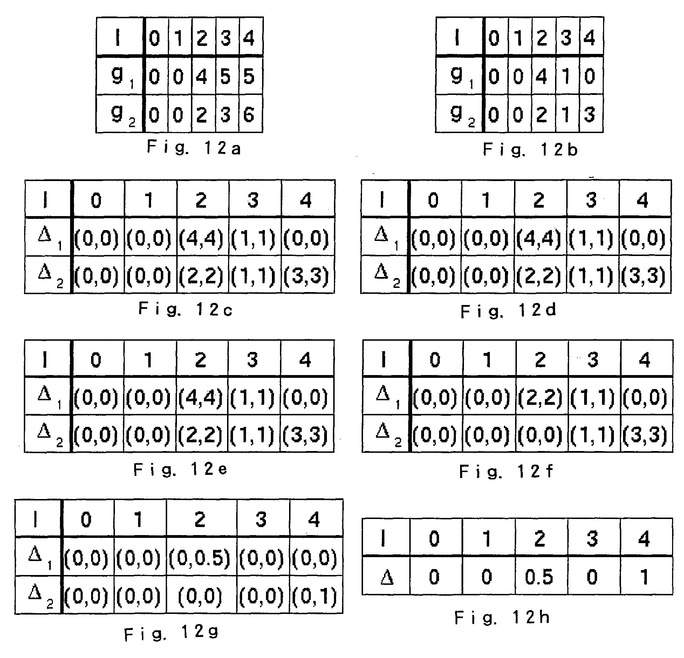

Figs. 12a, 12b, 12c, 12d, 12e, 12f, 12g and 12h are tables for calculating the difference of genus.

Figs. 13a, 13b, 13c, 13d, 13e and 13f show objects used for a matching experiment.

Fig. 14 shows the degrees of matching of the objects shown in Figs. 13a-13f.

Fig. 15 shows the matching result or similarity of the 160 objects according to one embodiment of the present invention.

Fig. 16 is a block diagram of the shape analyzer according to one embodiment of the present invention.

Fig. 17 shows a computer network including user terminals, an online shopping site, and an object or merchandise search service site employing shape analysis technology, according to one embodiment of the present invention.

The invention will now be described. A theoretical description based on mathematics is first provided, followed by preferred embodiments.

THEORETICAL ASPECTS OF THE EMBODIMENTS

Introduction

A novel technique, called Topology Matching, for searching 3D objects is explained. In this technique, similarity between polyhedral models is calculated by comparing their Reeb graphs.

A Reeb graph represents the skeletal structures of 3D shapes and can be used as a search key. The Reeb graphs used in this example are constructed using geodesic and Euclidean distance functions because these are invariant regarding translation and rotation. These Reeb graphs are also robust against changes of the connectivities caused by a mesh simplification or subdivision.

A Multi-resolutional Reeb Graph (MRG) is introduced to allow an efficient estimation of similarity in which differences of genus are also taken into account.

Topology Matching calculates similarity between 3D shapes quickly because it is not necessary to determine the particular pose of a 3D shape, such as a rotation, in advance. Topology Matching covers the matching of models that take different poses through rotation or translation, without the registration of the poses beforehand. Topology Matching is useful for searching for an object from a large dataset interactively because the results of the search fit human intuition well.

A particular embodiment focuses on the fast and efficient estimation of similarity between 3D shapes. In particular, the polyhedral model of 3D shapes is focused on because it is the most general model and can be easily converted to and from other representations such as NURBS surface, meta-balls (blobby), sub-division surface and so on.

Topology Matching comprises two phases. The first phase is to define or construct a key which represents the features of the 3D shapes. The key should be concise so that it can be easily stored in a database but also should represent the features of the shape sufficiently for good similarity estimation. The second phase is to calculate the similarity efficiently using the constructed keys for searching desired objects from the database.

In the first phase (defining the key), a type of a skeletal structure, a Reeb graph, is considered. A Reeb graph skeleton, defined by Dr. Reeb represents a skeletal and topological structure of a shape or object and is constructed using a continuous function called a Morse function defined on the object.

The Reeb graph has been chosen as a key for 3D shapes for the following reasons:

i) A Reeb graph always consists of a 1-dimensional graph structure, which makes it relatively easy to construct an algorithm for similarity estimation.

ii) Many different Reeb graphs can be generated for one object by using various continuous functions (Morse functions) defined on the object. By defining the Morse function appropriately, it is possible to construct a Reeb graph suitable for identifying the shape, that is, a Reeb graph which is invariant in rotation, translation and scaling of the 3D shape.

iii) A Reeb graph is associated with the value of a Morse function, such that it is possible to introduce a multi-resolutional structure into a Reeb graph. By using a Multi-resolutional Reeb Graph (MRG), similarity between 3D shapes can be calculated more efficiently.

The second phase of Topology Matching is to calculate the similarity between 3D shapes using the Reeb graph keys. Since the Reeb graph takes the form of a graph structure, it requires a computational cost of NP-complexity if it is naively calculated. In order to avoid this difficulty, Topology Matching calculates similarity using a coarse-to-fine strategy that makes use of Multi-resolutional Reeb Graphs.

As explained below, a difference of genus is also considered during the similarity estimation in order to increase accuracy. Genus represents the number of holes in an object. A difference of genus may be useful for the test of similarity because two objects having different genus cannot be morphed into each other without a change of topology.

*1. Reeb Graph and Its Multiresolutional Extension*

The Reeb graph is a topological and skeletal structure for an object of arbitrary dimensions. The Reeb graph always takes the form of a 1-dimensional graph structure. In Topology Matching, the Reeb graph is used as the key that represents features of a 3D shape. The formal definition of a Reeb graph is as follows.

Definition: Reeb graph

Let $m: C \rightarrow \boldsymbol{R}$ be a continuous function defined on an object surface (a CW-complex) $C$. The Reeb graph is the quotient space of the graph of $m$ in C x $\boldsymbol{R}$ by the equivalent relation $(X_1, m(X_1)) \sim (X_2, m(X_2))$ which holds if and only if

- $m(X_1) = m(X_2)$, and
- $X_1$ and $X_2$ are in the same connected component of $m^{-1}(m(X_1))$.

Apart from mathematical rigidity, it is easier to understand that a Reeb graph can be constructed by reducing into one point each isovalue cross-section of an object concerning the function $m$ and which are in the same connected component.

The continuous function $m$ is referred to as a Morse function. If the Morse function changes, the corresponding Reeb graph also changes. Among the various types of Morse functions and Reeb graphs, the simplest example is one in which a height function on a 2D manifold is defined as the Morse function. That is, the Morse function m returns the value of the z-coordinate (height) of the point v on a 2D manifold.

$$m(v(x,y,z)) = z$$

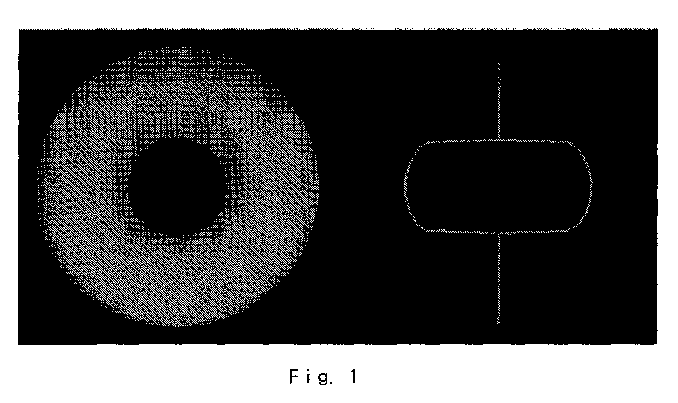

Fig. 1 shows the distribution of the height function on the surface of a torus and the corresponding Reeb graph. In this case, isovalue lines form cross-sectional contours, and the Reeb graph can be regarded as connectivity information of the contours.

*Multiresolutional Reeb Graph*

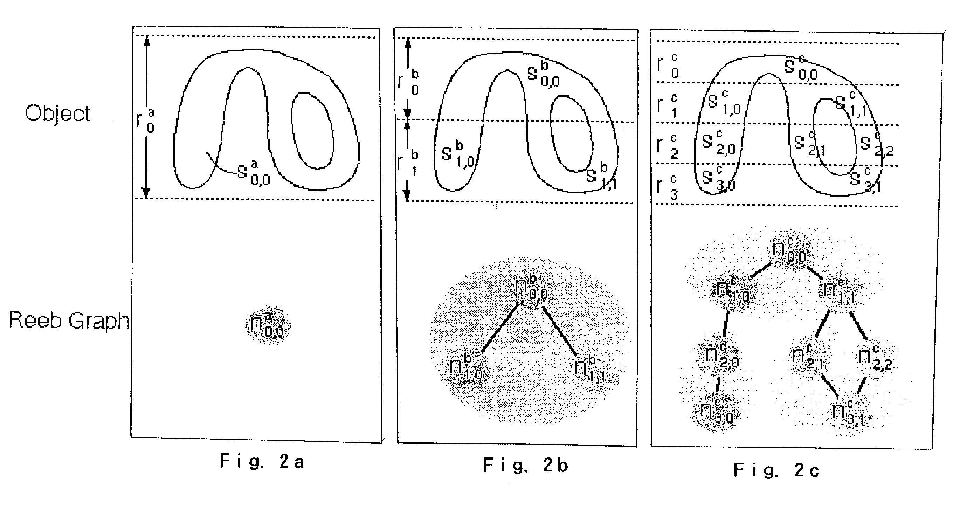

This subsection describes the new Multiresolutional Reeb Graph (MRG). The basic idea of the MRG is described as follows. To construct a Reeb graph of a certain level, an object is partitioned into some regions based on the Morse function. A node of the Reeb graph represents a connected component in each region, and adjacent nodes are linked by an edge if the corresponding parts of the object contact each other. The Reeb graph of a finer level is constructed by re-partitioning each region. In Topology Matching, the re-partitioning is done in a binary manner for simplicity. Figs. 2a-c show an example in which a height function is employed as the Morse function for convenience of explanation.

In Fig.2a, there is only one region $r^a{}_0$ and one connected component $s^a{}_{0,0}$. In Fig. 2b, the $r^a{}_0$ is re-partitioned to $r^b{}_0$ and $r^b{}_1$, giving connected components $s^b{}_{0,0}$ in $r^b{}_0$, and $s^b{}_{1,0}$ and $s^b{}_{1,1}$ in $r^b{}_1$.

The corresponding nodes are $n^b{}_{0,0}$, $n^b{}_{1,0}$ and $n^b{}_{1,1}$ respectively. According to the connectivities of $s^b{}_{0,0}$, $s^b{}_{1,0}$ and $s^b{}_{1,1}$, edges are generated between $n^b{}_{0,0}$ and $n^b{}_{1,0}$, and between $n^b{}_{0,0}$ and $n^b{}_{1,1}$.

Finer levels of Reeb graph are constructed in the same way. The MRG has the following properties:

Property 1:

There are parent-child relationships between nodes of adjacent levels. In Fig.2, the $n^a{}_{0,0}$ is the parent of $n^b{}_{0,0}$, $n^b{}_{1,0}$ and $n^a{}_{2,0}$.

Property 2:

By repeating the re-partitioning, the MRG converges to the original Reeb graph as defined by Reeb. That is, the finer levels approximate the original more exactly.

Property 3:

A Reeb graph of a certain level implicitly contains all of the information of the coarser levels. Once a Reeb graph is generated, a coarser Reeb graph can be constructed by unifying the adjacent nodes. Consider the construction of the Reeb graph shown in Fig. 2b from that shown in Fig. 2c as an example. The nodes $\{n^c_{0,0}, n^c_{1,0}, n^c_{1,1}\}$ are unified to $n^b_{0,0}$, $\{n^c_{2,0}, n^c_{3,0}\}$ to $n^b_{1,0}$, and $\{n^c_{2,1}, n^c_{2,2}, n^c_{2,3}\}$ to $n^b_{1,1}$. Note that the unified nodes satisfy the parent-child relationships.

Using these properties, the MRGs are easily constructed and similarity between objects is then calculated using a coarse-to-fine strategy.

*2. Definition of the Morse Function for Topology Matching*

The Reeb graph generated by using a height function as the Morse Function is easy to understand, and it is useful for modeling a 3D shape based on cross sections. However, it may not be appropriate as a key for identifying a 3D shape because the structure of the Reeb graph changes as the object is rotated. In order to construct a Reeb graph suitable for identifying an object, it is convenient to define a Morse function that provides a Reeb graph that is invariant regarding rotation.

In Topology Matching, the Morse function has been chosen such that it incorporates geodesic distance. Using geodesic distance provides rotation invariance and also has the useful property that it is insensitive to the sort of deformation shown in Fig. 3a. The use of this function approximates the ability of a human to recognize two poses or deformations of one object as the same object. The Morse function used in Topology Matching is defined in the remainder of this section.

First, let the function $morse_g$ be an integral of geodesic distance of point $v$ on a surface $S$, as follows

$$morse_g(v) = \int_{p \in S} gdist_S (v,p)dS \tag{1}$$

where the function $gdist_S(v,p)$ returns the geodesic distance on $S$. The continuous function $morse_g$ is invariant about rotation and translation, and behaves well regarding deformations of shapes. Further, a corrected function $morse'_g(v)$ is defined as below.

$$morse'_g (v) = \sqrt{\frac{morse_g(v) - min_{p \in S}\, morse_g(p)}{max_{p \in S}\, morse_g(p)}} \tag{2}$$

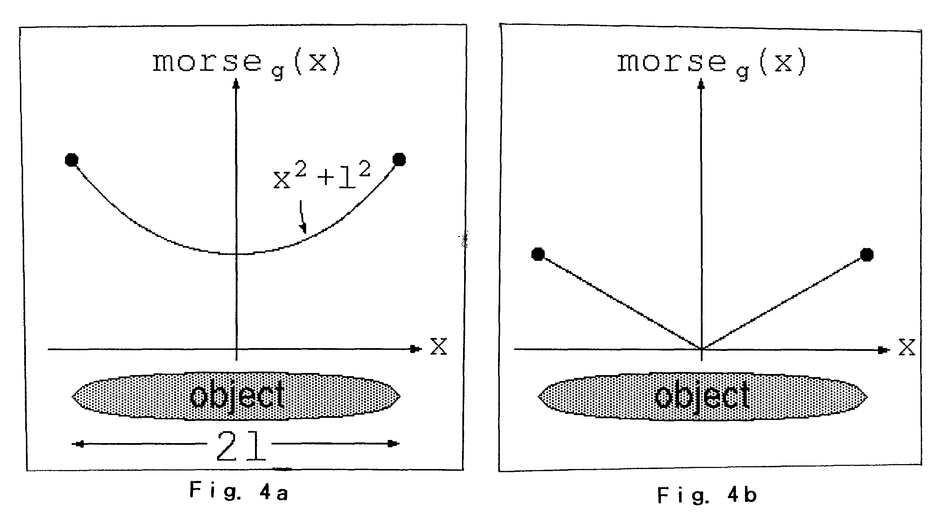

Figs. 4a and b show the effect of this corrected function. As shown in Fig. 4a, the density of $morse_g$ tends to focus around the center of an object in the form of a quadratic curve. If $morse_g$ is used directly as a Morse function without correction, the constructed Reeb graph will be biased in its ability to represent the features of a shape. That is, the features of corner parts will be represented more finely than those of center parts. The correction modifies the bias to that shown in Fig. 4b.

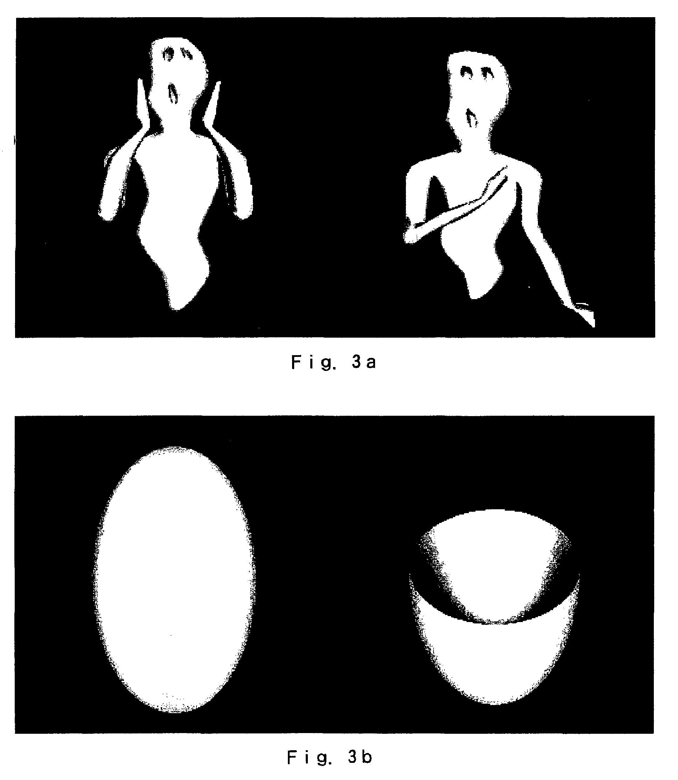

Although the corrected function $morse'_g$ is better at handling deformations, it has the drawback that the shapes in Fig. 3b are not distinguished. These two shapes have the same distributions of the function $morse'_g$.

In order to handle this problem, for Topology Matching, introduced is a function $morse_e$, which returns an integral of Euclidean distance.

$$morse_e(v) = \int_{p \in S} edist_S(v,p)dS \tag{3}$$

where the function $edist(v,p) = |v\text{-}p|$ represents the Euclidean distance. Then the corrected function is introduced as $morse'_e$ defined in the same way as $morse'_g$.

$$morse'_e(v) = \sqrt{\frac{morse_e(v) - min_{p \in S}\, mors_e(p)}{max_{p \in S}\, morse_g(p)}} \tag{4}$$

Finally, the overall Morse function morse used in Topology
Matching is defined as follows.

$$morse(v) = w_m\, morse'_g(v) + (1\text{-}w_m)morse'_e(v) \tag{5}$$

In this equation, $w_m$ is a weight factor. The constructed Reeb graph will be more insensitive to deformations of shape when $w_m$ is larger.

*3. Calculation and Construction of the Multiresolutional Reeb Graph*

Having now explained the definition and properties of the Morse function used in Topology Matching, this section describes how to calculate the Morse function *morse(v)* and construct the MRG in practice.

*Calculating the Integrals of Geodesic and Euclidean Distance*

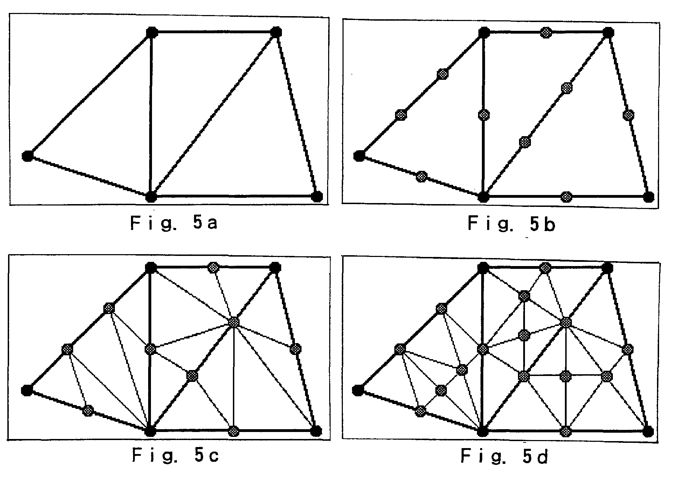

This subsection describes how to calculate the Morse function *morse (v)* for Topology Matching. In order to improve the speed of calculation, the geodesic distance is approximated by Dijkstra's algorithm based on edge lengths. For this purpose, each edge of a mesh is assigned its length as a property or attribute. In Topology Matching, because the value of the Morse function is assigned to each vertex of the mesh, the distribution of the vertices should be fine enough to approximate the geodesic distance and also represent the distribution of the Morse function exactly. It is therefore sometimes necessary to resample the vertices on the mesh based on a threshold $\rho$. The resampling procedure is shown in Figs. 5a and b. Vertices are added on edges larger than $\rho$ (Fig. 5b), then each triangle is subdivided using the added vertices (Fig. 5c). The procedure is repeated recursively until all edges are shorter than $\rho$ (Fig. 5d).

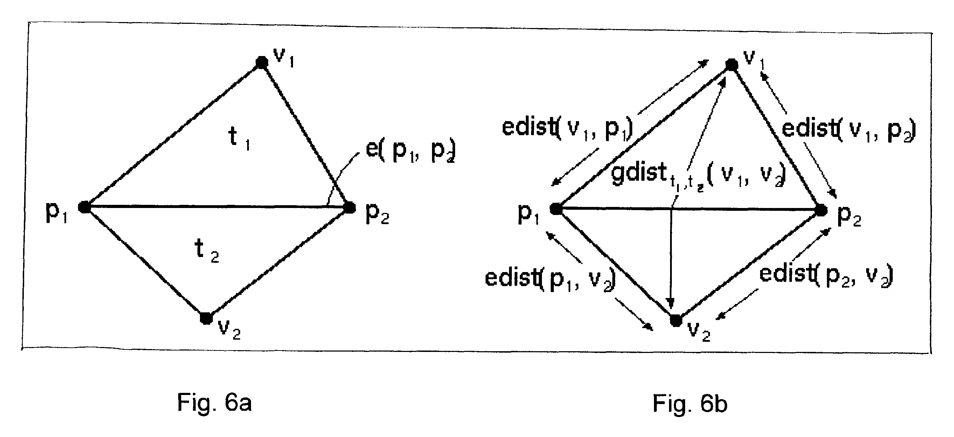

Next, special edges called "short-cut edges" are added to the mesh. If edges of a mesh are uniform in a direction, the calculation of the geodesic distance becomes inaccurate. Therefore, short-cut edges are introduced to modify the uniformity by making the directions of edges isotropic. Figs. 6a and b illustrate the algorithm for adding a short-cut edge. The triangles $t_1$ and $t_2$ are adjacent to the edge $e(p_1,p_2)$. The triangles $t_1$ and $t_2$ have vertices $v_1$ and $v_2$ respectively which do not touch $e(p_1,p_2)$.

If the criterion;

$$gdist_{t_1 \cup t_2} (v_1, v_2) < min(edist(v_1,p_1) + edist(p_1, v_2),$$

$$edist(v_1,p_2) + edist(p_2, v_2)) \tag{6}$$

where the function $gdist_{t1 \cup t2}$ returns the geodesic distance on the surface $t_1 \cup t_2$, is satisfied, then a short-cut edge $e_s$ $(v_1,v_2)$ which connects between $v_1$ and $v_2$ is added. The generated short-cut edge $e_s(v_1,v_2)$ between $v_1$ and $v_2$ holds the value $gdist_{t1 \cup t2}(v_1,v_2)$ as its length property.

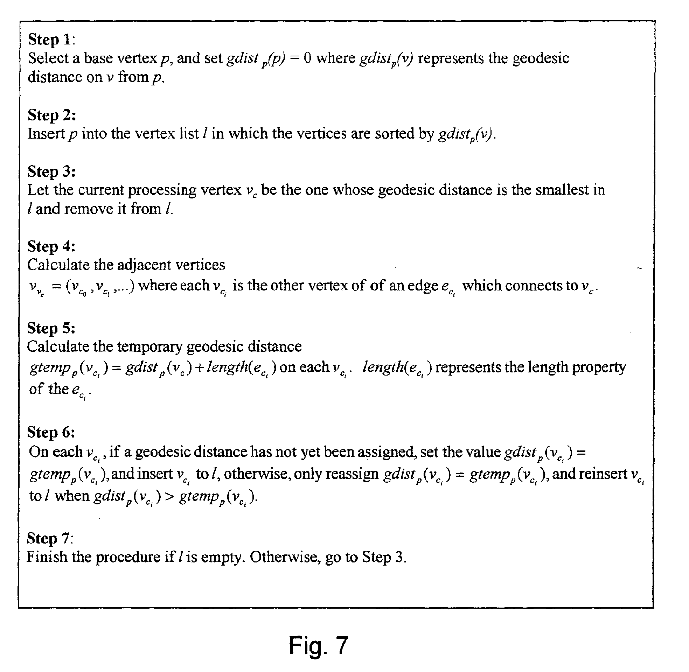

After the vertex resampling and short-cut edge generation, the geodesic distance of each vertex from a base vertex is calculated using the procedure $Dijkstra_{gdist}$ outlined in Fig. 7. Equation (1) is then approximated by

$$morse_g(v) = \sum_i gdist_S(v, p_i) \cdot area(p_i) \tag{7}$$

where the $\{p_i\}_i = \{p_0, p_1, ... \}$ are the base vertices for Dijkstra's algorithm which are scattered equally on the surface $S$. The *area* $(p_i)$ is the area that $p_i$ occupies, and $\Sigma_i$ *area* $(p_i)$ equals the *area (S)* which represents the whole area of $S$. The $\{p_i\}_i$ are selected using the procedure $Dijkstra_{gdist}$ with small modifications.

In the modified procedure, $V_{ci}$ is only inserted to 1 at Step 6 if $gtemp_p(v_{ci})$ is less than a threshold $d_p$. If *1* is empty at Step 7, an arbitrary unvisited vertex is selected as a new $p_i$, and the procedure is repeated by inserting it to *1*. If the threshold $d_p$ is smaller, more vertices are selected as $\{p_i\}_i$. An increase in the number of base vertices allows a more exact calculation of $morse_g(v)$ but requires much more computation time. In the implementation, the $d_p$ is defined in proportion to

$$\sqrt{area(S)}.$$

It is found that a

$$d_p = \sqrt{0.005 \cdot area(S)}$$

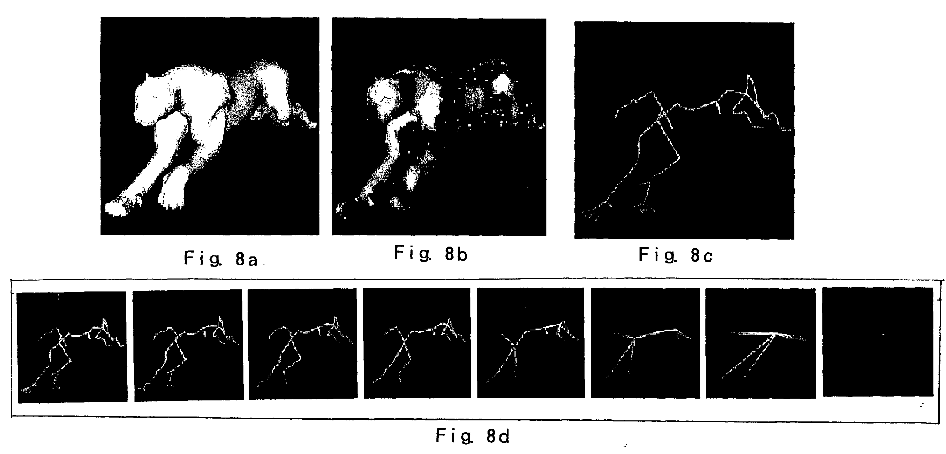

generates about 150 base vertices $\{p_i\}_i$ and achieves sufficient accuracy for $morse_g$ $(v)$. Fig. 8b shows an example of the $\{p_i\}_i$ (white points) and their occupying areas $area$ $(p_i)$. After the selection of the $\{p_i\}_i$, the $morse_g(v)$ is calculated using the procedure $Dijkstra_{gdist}$ as indicated above.

The $morse_e(v)$ is calculated by an approximation of equation (3) using the same base vertices $\{p_i\}_i$ used in the $morse_g(v)$

$$morse_e(v) = \sum_i edist(v, p_i) \cdot area(p_i) \qquad (8)$$

where the $edist(v,p_i)$ is the Euclidean distance between $v$ and $p_i$, and can be calculated directly without the procedure $Dijkstra_{gdist}$. Finally, the function $morse(v)$ is calculated from $morse_g(v)$ and $morse_e(v)$ as described in equation of section 2.

*Construction of the Multiresolutional Reeb Graph*

In order to explain the construction of a Multiresolutional Reeb Graph (MRG), the following notation is defined.

$$\{R^1\} = \{R^0, R^1, ..., R^l, ..., R^{lmax}\}:$$

MRG which consists of $l_{max}+1$ Reeb graphs.

$$\{r^l_i\}_i = \{r^1_0, r^1_1, ..., r^1_{2}{}^l\text{-}1\}:$$

$2^l$ regions which are partitioned in the Reeb graph $R^l$.

$$\{n^l_{i,k}\}_k = \{n^1_{i,0} n^1_{i,1}, ...\}:$$

nodes in the region $r^l_i$ of the Reeb graph $R^l$.

The construction of the Multiresolutional Reeb Graph (MRG) begins with constructing the finest $R^{lmax}$. After that, coarser $R^l$s are generated from $R^{lmax}$ using property 3 of MRGs described in section 1. In the construction of $R^{lmax}$, the vertices are resampled and the Morse function $morse(p)$ is assigned to them using the following procedure. The value of the function $morse(v)$ is normalized between 0 and 1 according to the definition in section 2.

Each $r^{lmax}_i$ corresponds to the components whose values are between $min$ $(r^{lmax}_i)$, $max$ $(r^{lmax}_i)$, where $min$ $(r^{lmax}_i) = i/2^{lmax}$ and $max(r^{lmax}_i) = (i+1)/2^{lmax}$. The $2^{lmax}$ regions $\{r^{lmax}_i\}_i = \{r^{lmax}_0, r^{lmax}_1, ..., r^{lmax}_{2^{lmax}-1}\}$ are partitioned uniformly in a binary manner.

Then, the triangles of the mesh $\{t_{i,j}\}_j = \{t_{i,0}, t_{i,1}, ...\}$ which satisfy the following condition can be extracted as triangles corresponding to each $r^{lmax}_i$:

$$(min \ (t_{i,j}) \leq max \ (r^{lmax}_i)) \wedge (min \ (r^{lmax}_i) \leq max \ (t_{i,j}))$$

where min $(t_{i,j})$ and max $(t_{i,j})$ are the minimum and maximum Morse value in the vertices held by $t_{i,j}$, respectively. The connected components on each region $r^{lmax}_i$ are then detected based on $t_{i,j}$. In the detection, adjacent triangles $t_{i,j1}$ and $t_{i,j2}$ are connected in $r^{lmax}_i$ if the following conditions are satisfied:

- The $t_{i,j1}$ and $t_{i,j2}$ have a common edge $e_{j1,j2}$
  which satisfies

$$(min \ (e_{j1,j2}) \leq max \ (r^{lmax}_i)) \wedge (min \ (r^{lmax}_i) \leq max \ (e_{j1,j2}))$$

where min$(e_{j1,j2})$ and max$(e_{j1,j2})$ are the Morse values of the two vertices of $e_{j1,j2}$, and satisfy min$(e_{j1,j2}) \leq$ max $(e_{j1,j2})$, or,

- The $t_{i,j1}$ and $t_{i,j2}$ have a common vertex $v_{j1,j2}$ which satisfies.

$$min \ (r_i^{l_{max}}) \leq m \ (v_{j1,j2}) \leq max \ (r_i^{l_{max}})$$

The connected components of $\{t_{i,j}\}_j$ are divided using the above conditions as follows:

$$\{t_{i,j}\}_j = \{t_{i,0,m}\}_m \ \cup \ \{t_{i,1,m}\}_m \ \cup \ ... \ \cup \ \{t_{i,k,m}\}_m \ \cup...$$

Each connected component $\{t_{i,k,m}\}_m = \{ t_{i,k,0}, t_{i,k,0},...\}$ is represented as a node $n^{l_{max}}_{i,k}$ in the finest Reeb graph. Finally, the edges of the Reeb graph are generated. If the connected components $\{t_{i,k,m}\}_m$ in $r^{l_{max}}_i$ and $\{t_{i-1,k2,m}\}_m$ in $r^{l_{max}}_{i-1}$ include the same triangle, the corresponding nodes $n^{l_{max}}_{i,k1}$ and $n^{l_{max}}_{i,k2}$ are linked by an edge. Fig. 8c shows an example of the finest Reeb graph.

After construction of the finest Reeb graph $R^{l_{max}}$, the coarser Reeb graphs $R^l s$ are constructed from $R^{l_{max}}$ using property 3 of MRGs. Fig.8d shows the construction of the MRG beginning from the finest Reeb graph, shown in Fig.8c.

*4. Matching Algorithm*

This section describes how similarity is calculated using the Multiresolutional Reeb Graphs (MRGs). In order to ensure accurate and efficient matching, two types of similarities are calculated between the Reeb Graphs $R^1_1$ and $R^1_2$ at each level 1.

$sim_{nodes}(R^l_1, R^l_2)$: similarity due to attributes of the nodes.
$sim_{genus}(R^l_1, R^l_2)$: similarity due to differences of genus.

Both similarities take values between [0,1] with a larger value indicating that the Reeb Graphs are more similar. Using these measures, the total similarity $sim(R_1, R_2)$ between the MRGs $R_1$ and $R_2$ (and therefore the 3D objects) is calculated as

$$sim(R_1, R_2) = \frac{\sum_l sim_{nodes}(R^l_1, R^l_2) sim_{genus}(R^l_1, R^l_2)}{l_{max} + 1} \tag{9}$$

The following subsections describe the attributes of nodes in a MRG and the method of calculating $sim_{nodes}$ and $sim_{genus}$.

*Attributes of Nodes in a Multiresolutional Reeb Graph*

In Topology Matching, each node $n^l_{i,k}$ in a MRG has the following attributes or properties that are used in the calculation of similarity:

$morse(n^1_{i,k})$ : the value of the Morse function
$area(n^1_{i,k})$: the area of $\{t_{i,k,m}\}_m$, which indicates the corresponding parts to $n^l_{i,k}$
$leaf(n^1_{i,k})$: the density of the nodes which descend from n in the finest Reeb graph. This attribute indicates the complexity of the descendent graph of $n^1_{i,k}$.

The basic concept using the area is that the ratio, in the entire surface of the object, of the area corresponding to a given node is compared with each other between the two Reeb graphs at each level of the multiresolution. The degree of matching will be evaluated to be high when the ratio above is close to each other.

The $area \ (n^{l_{max}}_{i,k})$ in the finest Reeb graph is calculated at the time of construction.

$$area(n^{l_{max}}_{i,k}) = \frac{\sum_m area_{ri}(t_{i,k,m})}{area(S)} \tag{10}$$

If the $t_{i,k,m}$ exists in only the region $r_i$, $area_{ri}$ returns the whole area of $t_{i,k,m}$. Otherwise, $area_{ri}$ returns a value which is divided in proportion to the distribution of the Morse function in $t_{i,k,m}$. The sum of area $(n^{lmax}_{i,k})$ concerning $i$ and $k$ is normalized to 1, so that the $area(n^{lmax}_{i,k})$ is invariant to scaling of the object. After the calculation of the $area$ $(n^{lmax}_{i,k})$ the functions $area$ $(n^l_{i,k})$ in the coarser Reeb graphs are calculated as the nodes are unified:

$$area\ (n^l_{i,k}) = \sum_{k_{2i}} area\ (n^{l+1}_{2i,k_{2i}}) + \sum_{k_{2i+1}} area\ (n^{l+1}_{2i+1,k_{2i+1}}) \qquad (11)$$

where $n^l_{i,k}$ is the parent of $\{n^{l+1}_{2i,\ k_{2i}}\}_{k_{2i}}$ and $\{n^{l+1}_{2i+1,k_{2i+1}}\}_{k_{2i+1}}$. Note that the $area\ (R^l) = \sum_{i,k} area(n^l_{i,k})=1$ is satisfied at any level $l$.

The $leaf(n^l_{i,k})$ is calculated in a similar way as $area\ (n^l_{i,k})$.

First, $leaf(n^{lmax})$ is the finest Reeb graph is initialized.

$$leaf(n^{lmax}_{i,k}) = min(max(r_i),\max_m(max(t_{i,k,m}))) - max(min(r_i),\min_m(min(t_{i,k,m})))$$

The equation above is conceptually the difference between the maximum and minimum of the Morse values in the surface portion corresponding to the node with regard to the leaf.

Next, the coarser values are calculated as follows:

$$leaf\ (n^l_{i,k}) = \sum_{k_{2i}} leaf\ (n^{l+1}_{2i,k_{2i}}) + \sum_{k_{2i+1}} leaf\ (n^{l+1}_{2i+1,k_{2i+1}}) \qquad (12)$$

Note that the value of $leaf(R^1) = \sum_{i,k} leaf(n^l_{i,k})$ is also constant.

*Similarity due to Attributes of Nodes*

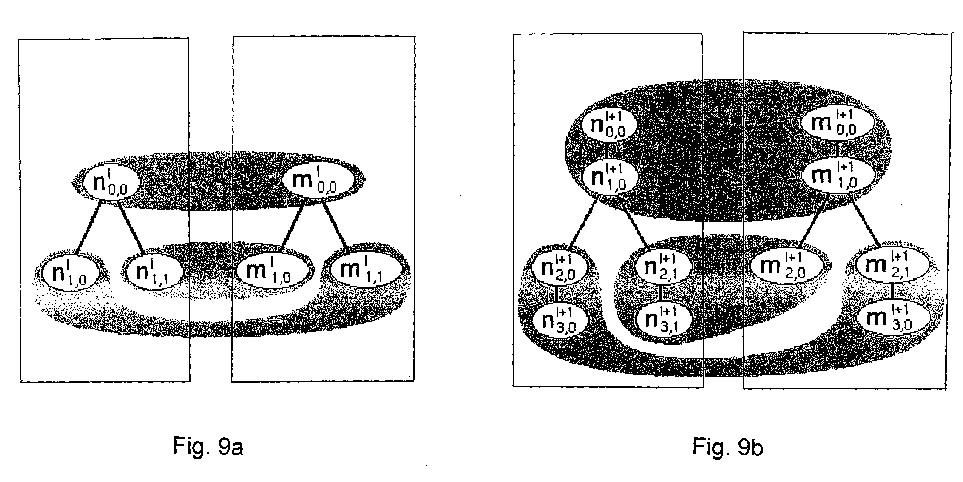

The $sim_{nodes}$ is calculated with a coarse-to-fine strategy. First, the nodes in the Reeb graphs of a particular level are matched, then only nodes of their children are candidates of matching at the finer levels. For example, in Fig. 9(a, matched nodes are shaded together, and the nodes $n^l_{1,0}$ and $m^l_{1,1}$ are matched at the level 1. Then in the next level 9(b), the children of $n^l_{1,0\ c}$ can match only with the children of $m^l_{1,1}$, that is, $\{n^{l+1}_{2,0}, n^{l+1}_{3,0}\}$ are only candidates to match with $\{m^{l+1}_{2,1}, m^{l+1}_{3,0}\}$.

Further, for simplicity, Topology Matching imposes the restriction that only nodes which have the same values of Morse function can match. Therefore, $n^{l+1}_{2,0}$ matches $m^{l+1}_{2,1}$ and $n^{l+1}_{3,0}$ matches $m^{l+1}_{3,0}$. When there are a number of nodes $\{m_i\}_i$ as candidates which can match with a single node $n$, Topology Matching selects a matching in which the following criterion takes a maximum value among the candidates:

$$w_s area(n)\frac{min(area(n),area(m_i))}{max(area(n),area(m_i))} +$$

$$(1-w_s)\frac{2leaf(n)}{leaf(R_n) + leaf(R_m)} \cdot \frac{min(leaf(n),leaf(m_i))}{max(leaf(n),leaf(m_i))} \qquad (13)$$

where $w_s$ ($0 \leq w_s \leq 1$) controls the weighting of the area attributes and the leaf attributes. The equation (13) takes into consideration both the similarity of the area and that of the complexity or the number of children held at the finest level.

In the selection of the matching nodes, there is a problem in that the structure of the Reeb graph is sensitive to the placement of the region boundaries of the Morse function.

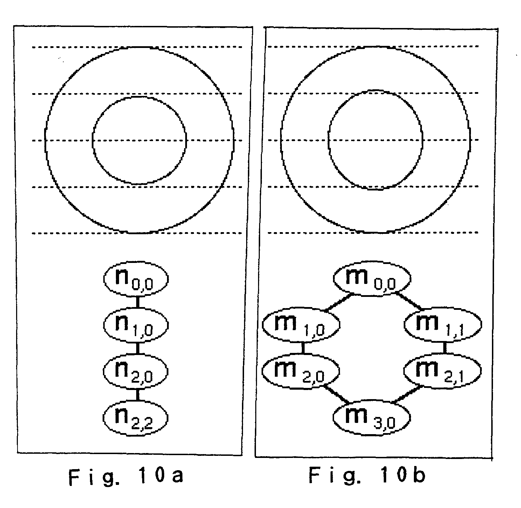

Figs. 10a and b show an example in which the same object results in different Reeb graphs due to slight differences in the placement of the region boundaries. To overcome this problem, Topology Matching provides that the node $n_{i,k_0}$ matches the nodes $\{m_{i,k_1}\}_{k_1}$ simultaneously if all nodes $\in \{m_{i,k_1}\}_{k_1}$ connects to the same node $m_{i-1,k}$ at the upper or $m_{i+1,k}$ at the lower. For example, in Figs. 10a and b, $n_{1,0}$ can match $\{m_{1,0}, m_{1,1}\}$ simultaneously because $m_{1,0}$ and $m_{1,1}$ connect to the same node $m_{0,0}$ at the upper. In this case, there are three candidates which can match $n_{1,0}$;

i.e., $m_{1,0}$, $m_{1,1}$ and {$m_{1,0}$, $m_{1,1}$}. The selected matching of $n_{1,0}$ and {$m_{1,0}$, $m_{1,1}$} is calculated by regarding {$m_{1,0}$, $m_{1,1}$} as the new node $m_{1,0U1}$ where *area* ($m_{1,0U1}$) = *area* ($m_{1,0}$) + *area* ($m_{1,1}$) and *leaf* ($m_{1,0U1}$) = *leaf*($m_{1,0}$) + *leaf*($m_{1,1}$).

In the actual implementation, in order to speed calculation, the node matchings are straightforward and there is no backtracking. The processing is carried out

$$order(n) = w_s area(n) + (1 - w_s)\frac{2leaf(n)}{leaf(R_n)+leaf(R_m)} \tag{14}$$

in descendent order using the following ordering function *order(n)* at each Morse value.

For example, consider the matching of the nodes $n_{i,0}$, $n_{i,1}$ in Reeb graph $R_n$, and the nodes $m_{i,0}$, $m_{i,1}$ in Reeb graph $R_m$. If the nodes satisfy $order(n_{i,0})>order(m_{i,0})>order(m_{i,1})>order(n_{i,1})$, the first step is to calculate the matching about $n_{1,0}$. Next is to calculate the matching about $m_{1,0}$ if not yet matched, and so on.

After the calculation of matching of nodes in two Reeb graphs at a level *1*, the similarity $sim_{nodes}$ is calculated by the following equation:

$$sim_{nodes}(R_n^l, R_m^l) = w_s \sum_x min(area(n_x^l), area(m_x^l)) +$$

$$(1-w_s)\frac{2\sum_x min(leaf(n_x^l), leaf(m_x^l))}{leaf(R_n^l) + leaf(R_m^l)} \tag{15}$$

where {$n_x^l$, $m_x^l$} is the calculated matching.

*Similarity due to Differences of Genus*

Similarity in the difference of genus may be also an important factor in classifying an object, therefore the function $sim_{genus}$ is calculated so that this measure of similarity can be combined with the similarity due to attributes of nodes calculated above. In general, as long as there is no degeneracy of the critical points, the genus *g* of an object can be calculated using the number of components in the Reeb graph:

$$g = \# (edge) - \#(node) + 1$$

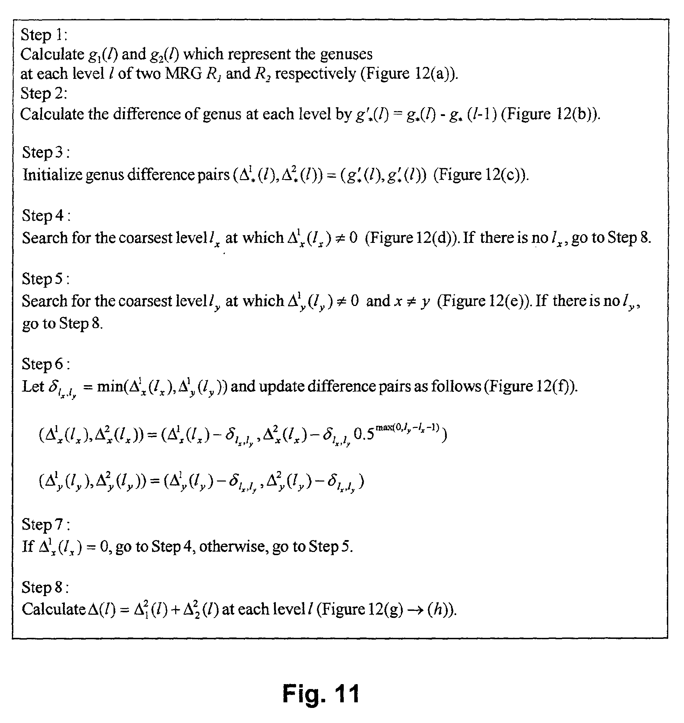

Using this equation, the procedure $Dif_{genus}$ in Fig. 11 is used to calculate the Δ (*l*) which represents the difference of genus at each level *l* between two MRGs.

It can be seen that the Δ(*l*) of coarser levels should have more influence on the result of $sim_{genus}$. As a result, $sim_{genus}$ is formulated as follows.

$$\begin{cases} \text{if } l < 2, & sim_{genus}(R_1^l, R_2^l) = 1. \\ \text{otherwise,} & sim_{genus}(R_1^l, R_2^l) = (1-0.5^{l-1})^{\Delta(l)} \times sim_{genus}(R_1^{l-1}, R_2^{l-2}) \end{cases} \tag{16}$$

At level *l* = 0 or 1, the $sim_{genus}$ returns 1 because Δ(*l*) is always 0. The basic concept lying behind the equation is that the two Reeb graphs are evaluated similar if the timing a genus or a hole appears in the coarse to fine approach is close to each other in the two graphs.

*5. Experiments*

Experiments were conducted to test the Topology Matching procedure. The experiments made use of 160 different polygonal meshes selected from the Viewpoint models (http://www.viewpoint.com), the 3DCAFE free stuff (http://www.3dcafe.com), the Stanford University (http://www-graphics.stanford.edu/data/3Dscanrep) and the original data made for the experiment. The computer used was an Intel Pentium II 333 MHz processor with the Linux operating system. Throughout the experiments, the parameters used were $w_s$=0.5 and $l_{max}$ +1 = 8. As described above, $w_s$ controls the contributions of the *area* attribute and the *leaf* attribute in the calculation of $sim_{nodes}$, and the $l_{max}$ +1 is the number of the levels in the MRG.

*Construction of Multiresolutional Reeb Graph*

In calculating the similarity, it is necessary to first construct an MRG for each mesh. In this construction, the phase of calculating the Morse value using the procedure $Dijkstra_{gdist}$ occupies about 90% of the whole computational time. The procedure $Dijkstra_{gdist}$ has a cost of $O(v \log v)$ where $v$ is the number of vertices in the mesh. According to the experiments, using 150 base vertices for the $Dijkstra_{gdist}$ to give a sufficient approximation of the geodesic distance, an MRG for a mesh of 10,000 vertices can be calculated within about 15 seconds.

*Geodesic Distance vs. Euclidean Distance*

The parameter $w_m$ controls the weighting of the use of geodesic and Euclidean distance in the calculation, and, thus, the sensitivity to shape deformation (see Section 2). A larger $w_m$ (i.e., the weighting of geodesic distance is larger) provides greater insensitivity to shape deformation. When the $w_m$ is less than 0.5, similarity becomes unstable and does not change uniformly.
A small $w_m$ may be effective for other purposes, such as detecting if there is deformation of an object, however for Topology Matching a comparatively large $w_m$ is appropriate. In the following experiments, $w_m$=0.7 was employed.

*Matching and Search*

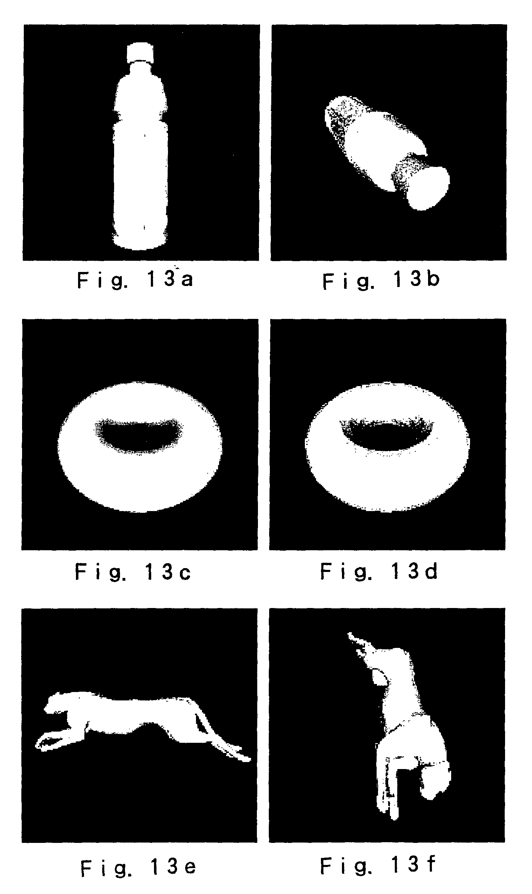

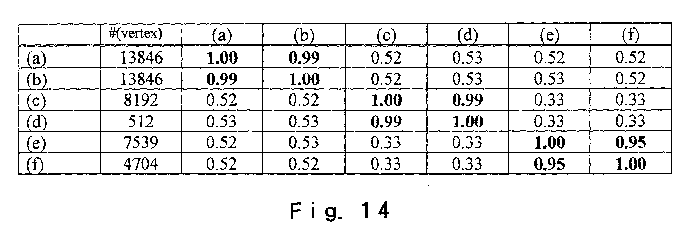

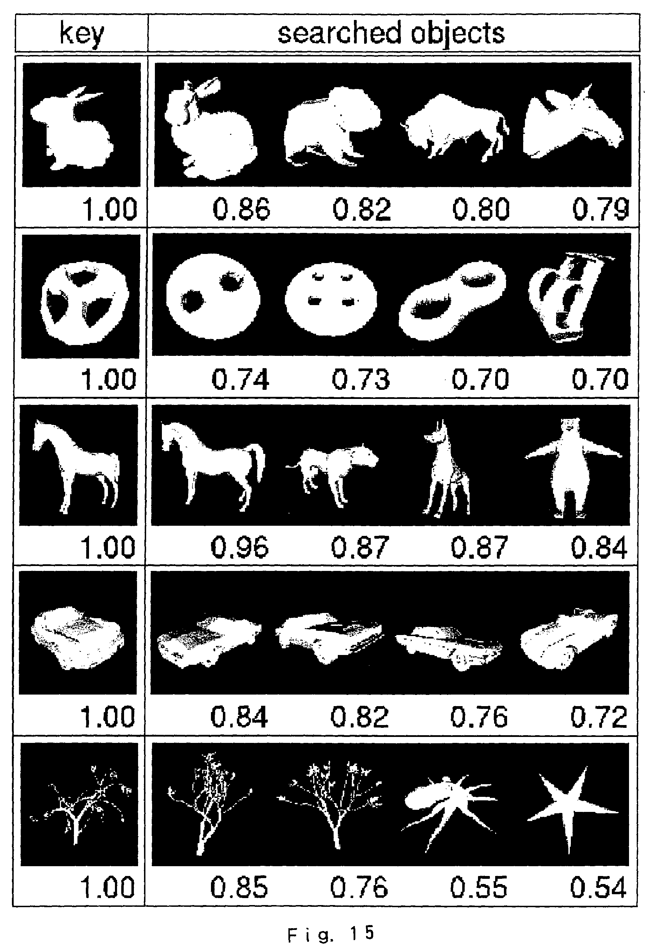

A matching experiment was conducted using the six models shown in Figs. 13a-f. The mesh pairs {13a, 13b}, {13(c), 13d} and {13e, 13f} represent same objects, but the mesh 13b was generated by rotating, translating and scaling (Euclidean transformations) the mesh 13a, the mesh 13d is a simplified model of the mesh 13 (c) , and the mesh 13f is also the simplified model of the mesh 13e that has also been subject to Euclidean transformation. The numbers of vertices in each mesh and the results of the calculated similarities are listed in Fig. 14. The results show that Topology Matching can accurately identify even a mesh in which the connectivities have been changed (simplification) and that has been subject to Euclidean transformations.
Finally, an experiment was performed to search for an object from among all 160 meshes. In this case, the MRGs for each of the 160 meshes were constructed in advance. In the search, one model is selected from the 160 models, the similarities between it and the other models are calculated, and the models are sorted according to the resulting similarity. Some example results of the experiment are shown in Fig. 15. The given model is shown as the key and the models returned with the highest similarities are shown under searched objects. It is safely believed that the results agree well with general human intuition. The time for the calculation of similarity between a model and the other 160 models varied from 0.87 *sec.* to 3.69 *sec.,* with an average of 2.11 *sec.;* i.e., on average, it took only 1.31 x $10^{-2}$ *sec.* to calculate one similarity.

*6. Conclusions*

A new technique called Topology Matching is presented for the efficient calculation of similarity between 3D shapes. As the key of a shape, a Multiresolutional Reeb Graph (MRG) is constructed based on the geodesic and Euclidean distance. The similarity is calculated with a coarse-to-fine strategy using the node properties of the Reeb graph and differences of genus. Topology Matching provides fast and efficient computation of the similarity and provides results that agree well with human intuition.
Topology Matching can be used to construct an MRG for and calculate the similarity for any type of polyhedral mesh, that is, it can manage any 2-dimensional CW-complex.
However, unexpected matching may be caused if the mesh is invalid. For example, a non-closed or non-manifold surface tends to lead to incorrect results when the irregular part is large. In order to calculate a more exact similarity for these meshes, it is proposed to develop a method of relaxing the irregularity, such as by conforming the connectivities to the mesh's appearance. Further, adding more properties, such as curvature or texture, to Topology Matching will also enable more exact matching.
Topology Matching can be put to use in various applications in which fast estimation of similarity is important. For example, Topology Matching can be used to search for 3D shapes through the Internet automatically. For electronic commerce, a prepared 3D catalog that includes MRGs, could allow customers to search for products similar to a particular design of merchandise. In the case of electronic commerce, it would also be useful to develop techniques for generating a suitable search MRG even if a 3D model is not available.

PREFERRED EMBODIMENTS

Now preferred embodiments of the present invention are explained using the above theory.

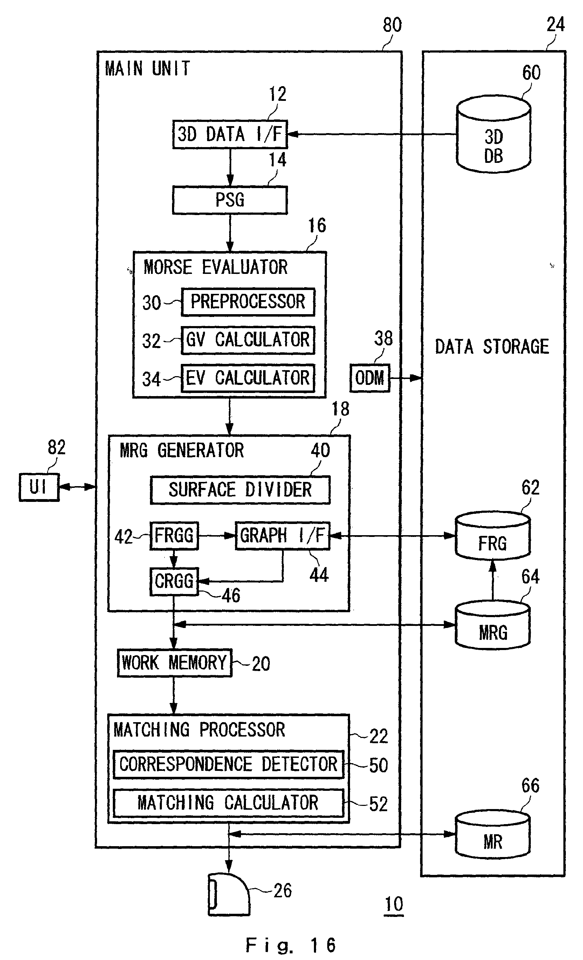

Fig.16 is a block diagram of a shape analyzer 10 according to one embodiment of the present invention. In this case, the shape analyzer 10 is realized with a personal computer (PC). The shape analyzer 10 comprises a main unit 80, a user interface 82 and data storage 24. The data storage 24 includes a 3D database 60, an FRG storage 62, an MRG storage 64 and a matching result storage 66. The 3D database 60 stores the 3D mesh data of objects. The FRG storage 62 stores the finest Reeb graphs of the objects. The MRG storage 64 stores the multiresolutional Reeb graphs or MRGs of the objects. The matching result storage 66 stores the matching result. The data storage 24 may be realized within a hard disk drive, a MO disk drive or any other storage devices within or provided outside the PC. The data storage 24 or arbitrary components may be implemented in a remote drive or device accessible via a network.

The main unit 80 is realized by the collaboration of a central processing unit (CPU), memory in which the program modules of the shape analysis are installed, a storage controller, an image/display controller and other devices. In Fig. 16, however, the blocks are drawn based on function. It is noted and understood that each block of the main unit 80 can be realized with a relatively flexible combination of hardware and software solutions.

A user controls the shape analyzer 10 via the user interface 82, which may be a mouse, a keyboard and/or any other input devices.

The 3D data interface 12 inputs the 3D data of an object from the 3D database 60 according to the instruction of the user. The instruction is transferred via the 3D data interface 12 to an object database manager 38, where all the operations on the data storage 24 are managed. The input data is sent to a point set generator 14. When the data is represented as a set of discrete point data, the point set generator 14 first defines or selects part of the set of discrete points to be processed for graph construction, described later. The point set generator 14 then connects the selected points, for example, based on a known method to convert the data to mesh data. The point set generator 14 may select all the discrete points as the defined points if the processing power of the shape analyzer 10 or any other conditions allow. When the input data is already mesh or polygonal data in its original representation, the point set generator 14 may only transfer the data as the defined data to a Morse evaluator 16.

The Morse evaluator 16 comprises a preprocessor 30, a geodesic value calculator 32 and a Euclidean value calculator 34. The geodesic value calculator 32 and the Euclidean value calculator 34 employ the geodesic and Euclidean functions as Morse functions, respectively. The preprocessor 30 conducts re-sampling, subdivision and generation of short-cut edges on the mesh data transferred from the point set generator 14, as described in section 3 and Figs. 5a-5d, 6a and 6b in the

THEORETICAL ASPECTS OF THE EMBODIMENTS.

After the process of the preprocessor 30, the geodesic value calculator 32 and the Euclidean value calculator 34 calculate Morse values based on the equations (2) and (4) in section 2, respectively. On calculating these equations, the approximation by the equations (7) and (8) are used, respectively. Finally, the Morse evaluator 16 outputs to an MRG generator 18 the synthesized Morse values of the mesh vertices according to equation (5) in section 2.

Based on the synthetic Morse values or the values of *morse(v),* the MRG generator 18 constructs the MRG of the object. First, a surface divider 40 uniformly partitions, based on the values of the surface of the object, into $2^{lmax}$ regions $\{r^{lmax}_i\}_i$ at the finest level $l_{max}$ as described in section 3.

A finest Reeb graph generator or FRGG 42 then detects connected components at the level $l_{max}$ by examining the connectivity of the triangles $t_{i,j}$ in the mesh and constructs an FRG, the Reeb graph at the finest level.

The FRG is transferred to a coarser Reeb graph generator or CRGG 46 and via a graph interface 44 to the FRG storage 62 to be stored. The CRGG 46 constructs the coarser Reeb graphs from the FRG using Property 3 mentioned in section 1. The CRGG 46 sends the complete MRG to the MRG storage 64 by combining the FRG and the series of coarser Reeb graphs. The MRG is also sent to a work memory 20 to be buffered for the later matching process. The MRG may be constructed every time the object is matched in a matching processor 22, in which case, the MRG storage 64 is not necessary.

The MRG, however, is preferably preserved to reduce the computational cost of construction. In this embodiment, since the FRG is preserved in the FRG storage 62, the MRG itself may be discarded after it has been copied in the work memory 20, as the construction of the MRG from the FRG is relatively straightforward, requiring small computational cost. The CRGG 46 first searches in the FRG storage 62 whether the FRG of a new object is already stored in the FRG storage 62, when it starts the construction of the new object. The CRGG 46 retrieves and inputs via the graph interface 44 the FRG of the new object when it is found in the FRG storage 62. The FRG may be extracted from the MRG storage 64 and copied in the FRG storage 62 after it has been stored in the MRG storage 64.

The work memory 20 stores the MRG of the present object, which is hereinafter referred to as "the first MRG". For the purpose of matching, the MRG of the second object or the second MRG should be prepared. To achieve this, the 3D data of the second object may be retrieved from the 3D database 60 and the same process undertaken on the first object may be repeated. The second FRG or MRG may be retrieved from the FRG storage 62 or MRG storage 64, respectively, where appropriate. In any case, the second MRG is stored in the work memory 20 after a series of processes.

A matching processor 22 reads the first and second MRGs from the work memory 20. A correspondence detector 50 works to limit the number of combinations or candidates of nodes to be matched between the first and second MRGs, to make the matching result reasonable while reducing the total computational cost. The correspondence detector 50 specifies the combination of nodes which may correspond to each other according to the criteria introduced in "Similarity due to Attributes of Nodes" in section 4, especially with reference to equations (13) and (14). The correspondence detector 50 outputs the obtained specification of correspondence to a matching evaluator or matching calculator 52.

The matching calculator 52 evaluates the degree of matching between the first and second MRGs, conducting similarity calculations on the corresponding elements of the graphs or nodes. The matching calculator 52 first calculates using the equations (10), (11) and (12) for the calculation of the equations (15) and (16), the two values of which in turn are input to the equation (9) to obtain the final value on the similarity. The final value is stored in the matching result storage 66 as the matching result. The final value is also transferred to a display 26, where the similarity between the objects is displayed, for example, in a manner shown in Fig. 15.

The above process can also be repeated for subsequent objects to provide a number of similarity results as shown in Fig. 15. In the case where an FRG or MRG for the objects has already been calculated, the search can proceed quickly.

According to this embodiment, the user can easily find objects whose shapes are similar to a given object designated by the user. It is convenient if the matching processor 22 rearranges the objects based on the similarity as shown in Fig. 15. The shape analyzer 10 thus can be used for various object search purposes including parts search in design, scientific analysis on captured and/or discrete data, shape-based database construction and commodity search in EC or electronic commerce.

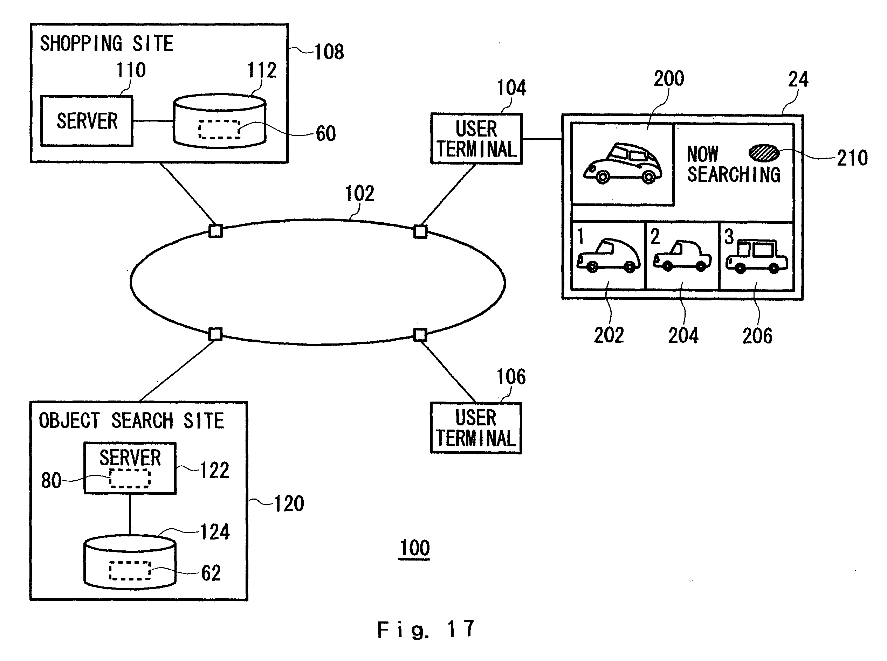

Fig. 17 shows a network system suitable for use in electronic commerce (EC) or the like, according to another embodiment of the present invention. The network system 100 comprises an object search site 120, a shopping site 108 and a plurality of user terminals 104 and 106, all of which are connected to a network 102, typically the Internet but which may include any reasonable type of network. In this embodiment, users participate in online shopping.

The shopping site 108 has a WWW shopping server 110 and a data storage 112 for storing data of merchandise and other information the site is providing to the users. The data storage 112 has a partitioned area or the 3D database 60, for storing 3D representations of the merchandise.

The object search site 120 also has a WWW search server 122 and data storage 124 under the control of the search server 122. The search server 122 has the major functions or the main unit 80 for the object matching installed. The user terminal 104 generally does not provide the matching function, as the matching is conducted in the object search site 120 as its service. The data storage 124 has a partitioned area or the FRG storage 62 inside, for storing the FRGs of the merchandise. These FRGs have been stored for various merchandise of the shopping site 108 based on a service contract and the like between the shopping site 108 and object search site 120.

The search server 122 includes a CGI (Common Gateway Interface) program initiated when the user requests to search merchandise which are similar to the merchandise the user chose as a candidate for purchase in one of the Web pages of the shopping site 108. The CGI function is linked from the page where the user requested the search service.

To be specific, the user of the user terminal 104 first selects the candidate, for example a toy car, in the upper left "candidate" area 200 in the display 26. The HTML page being displayed is transmitted from the shopping site 108, and the CGI call function is embedded in the candidate area 200 and in a submit button 210 of the page. The user pushes the button 210 when requesting to search for similar cars.

The request is sent to the object search site 120 together with the candidate. The search server 122, especially the main unit 80 thereof, confirms whether the FRG of the candidate is already stored in the data storage 124. If it is stored, the search server 122 constructs the MRG of the candidate and the MRGs of other merchandise. The search server 122 limits the scope of merchandise to search, within the area of toys. To achieve this, the shopping page displayed at the user end may have embedded therein a blank area for the user to enter a few keywords for the search. Searching using the combination of shape and text information usually brings a better and/or more prompt search result.

If the FRG of the candidate is not stored in the data storage 124, the search server 122 requests that the shopping site 108 send the 3D data of the candidate. After receiving the 3D data, the search server 122 constructs the MRG of the candidate in the same manner as the shape analyzer 10.

The search server 122 then conducts the similarity evaluation between the MRG of the candidate and the MRGs of the other toy cars. The result is now sent back to the Web page at the user terminal 104 and the similar cars are displayed in the bottom of the display 26. In this case, the most similar, the second most similar and the third most similar cars are fitted into the ranked windows 202, 204 and 206, respectively.

Several modifications to the above embodiments are now explained.

In the above embodiments, a Reeb graph is employed as the global topological graph of an object. Other graphs may be adopted as long as they show at least part of the global topology or the structure of an object. Modifications of the Reeb graph, medial axis representation and its modifications, and other skeletal representations of the object may be employed.

Other types of functions can be adopted as the Morse function. The Morse function may comprise a feature of other distance functions such as an $r^a$ (a<>0) type arbitrary dimensional distance function, using the distance r between the points to be processed. The distance may be summed with regard to the points on the surface of the object, in a similar manner to equations (1), (3), (7) and (8). Summation and other operations, which make the function invariant to geometric operations such as rotation, are convenient for coding the object.

The Morse function may comprise a feature of an **r** type vector function using a vector between the points, being a feature of a distance function defining the distance between a reference point of the object and the points on the object. The reference point may be the center of gravity of the object or the center of the sphere convolving the object, which are invariant to rotation.

The function may comprise a feature of a four-dimensional function defining an attribute of the three coordinates of the points on the object. This attribute may be color, texture coordinate, normal or curvature at the points.

By employing the four-dimensional function, volume data such as voxel data can be handled. The fourth dimension is the density value at the point on the object. In this case, not only the surface of the object, but the volume can be handled. The volume may be not only solid, but discrete points such as atmosphere or cloud. The "area", used in the equations (10), (11) and so on, is replaced by "3D area" or "volume". Each volume is defined as a set of points partitioned into a same space according to the Morse value. When the volume data is represented in uniform voxels, it is possible to compose a "3D mesh" by connecting edges between voxels contacting each other. When the size of the voxels is uneven, each voxel may be subdivided into a plurality of unit voxels endowed with the same density values as the "parent" voxel. The 3D mesh can then be composed, and is used instead of the triangles used in the mentioned embodiments. The geodesic function for the volume data gives the shortest distance along the paths taken on or inside the object.

It should be noted that the present invention is applicable to arbitrary dimensional data, as can be seen from the above four-dimensional examples.

In the mentioned embodiments, a coarser graph of the MRG is constructed by unifying adjacent nodes in the finest Reeb graph. The coarser graph may be constructed by deleting details of the finest graph, for example, by deleting relatively short edges of the finest graph.

In the mentioned embodiments, the Morse function is used to partition the object. The Morse function, however, may be used to detect the critical points according to its original definition. The detected critical points and the connectivity thereof may be used as the nodes and the edges of the finest Reeb graph, respectively. When the critical points are used as the nodes, the finest Reeb graph may be simplified by deleting the terminal nodes in order to make a coarser Reeb graph.

The FRGs instead of the MRGs are preserved in a few of the mentioned embodiments. Instead of the FRG, however, the Morse values may be preserved, as the FRG can be relatively easily constructed from the Morse values.

Genus is considered in the matching calculation in the mentioned embodiments, but this aspect may be neglected, especially when the topology of the object changes. In the case of a human, the arm and the body make a hole when the arm is resting on the waist, whereas otherwise the hole does not exist, resulting in a change of topology.

The 3D data of objects may be input into the object search site 120 or anywhere else with a 3D digitizer, which may include a stereo camera or a camera with a depth detector and a program to convert the shot discrete points to mesh data.

The network system 100 may further include a charge management site to authenticate users and shoppers and to manage payment by the users for the merchandise they buy.

The network system 100 may be applied to CALS or design and component standardization in CAD/CAM. The user terminal 104 may be a designer's CAD machine, from which the designer requests a component database management server. This may include the function of the object search site 120, to search and transmit components similar to a candidate the designer sent to the management server. It is sometimes difficult to effectively express the shapes of components only using text keywords and this embodiment will make the design procedure easier.

The first object to be matched with others is not necessarily chosen by the user. The search server 122 or any other shape analyzer of the present invention may calculate the similarity between any two objects at any time during its operation. Similar objects may be rearranged to be displayed together, even without the user's search request.

The object search site 120 may search for objects other than those stored in the shopping site 108. The object search site 120 may select similar objects from a plurality of shopping sites for the users' convenience.

In the description above, various experimental values are provided for reference only. Actual results will vary depending on the system used. For example, an implementation in hardware could provide much better computational speed.

Although the present invention has been described in the embodiments, many changes, modifications and replacements may be made by those skilled in the art without departing from the scope of the present invention, which is defined only by the appended claims.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

**Claims**

1.  A shape analyzer (10) **characterised in that** it comprises:

    an interface (12) through which three-dimensional data representing shape of an object is received;
    a point set generator (14) which defines a plurality of points to be processed on the received three-dimensional data;
    an evaluator (16) which obtains Morse values of a Morse function at the defined points, the Morse function being selected such that it becomes invariant to a predetermined geometric operation on the object; and
    a graph generator (18) which constructs a global topological graph of the three-dimensional data based on the obtained Morse values.

2.  The shape analyzer (10) of claim 1 **characterised in that** the topological graph comprises nodes and edges connecting the nodes, the nodes being given to each region of the object, the region being defined by partitioning the object using the Morse values.

3.  The shape analyzer (10) of claim 1 **characterised in that** the topological graph comprises nodes and edges connecting the nodes, the nodes being given to the discrete points which are critical with regard to the Morse values.

4.  The shape analyzer (10) of claim 1 **characterised in that** the geometric operation includes rotation.

5.  The shape analyzer (10) of claim 1 **characterised in that** the Morse function is selected such that it becomes insensitive to deformation of the object.

6.  The shape analyzer (10) of claim 1 **characterised in that** the three-dimensional data is mesh data and the Morse function is defined using lengths of edges comprising the mesh.

7.  The shape analyzer (10) of claim 1 **characterised in that** it further comprises a processor (22) which calculates similarity of a first topological graph of a first object and a second global topological graph of a second object which are constructed by the graph generator (18), based on a predetermined similarity criterion.

8.  The shape analyzer (10) of claim 1 **characterised in that** the graph generator (18) constructs a plurality of resolutional levels of the global topological graph of the object based on topological computation of the three-dimensional data.

9.  The shape analyzer (10) of claim 8 **characterised in that** the graph generator (18) constructs a graph at a coarse level of the global topological graph, by coarsely partitioning the object into plural regions and by associating the regions with nodes of the graph at the coarse level.

10. The shape analyzer (10) of claim 8 **characterised in that** the graph generator (18) constructs a graph at a coarse level of the global topological graph by deleting details of a graph at a finer level.

11. The shape analyzer (10) of claim 8 **characterised in that** it further comprises a processor (22) which calculates similarity in the resolutional levels of a first topological graph of a first object and a second global topological graph of a second object which are constructed by the graph generator (18).

12. A shape analyzer (10) **characterised in that** it comprises:

an interface (12) through which three-dimensional data representing shape of an object is received; and
a graph generator (18) which constructs a plurality of resolutional levels of a global topological graph of the object based on topological computation applied to the three-dimensional data.

13. The shape analyzer (10) of claim 12 **characterised in that** the graph generator (18) constructs a graph at a fine level of the global topological graph by detecting critical points included in the three-dimensional data and by defining nodes of the graph at the fine level with the detected critical points.

14. The shape analyzer (10) of claim 12 **characterised in that** the graph generator (18) constructs a graph at a coarse level of the global topological graph by coarsely partitioning the object into plural regions and by associating the regions with elements of the graph at the coarse level.

15. The shape analyzer (10) of claim 12 **characterised in that** the graph generator (18) constructs a graph at a coarse level of the global topological graph by deleting details of a graph at a finer level.

16. The shape analyzer (10) of claim 12 **characterised in that** it further comprises a processor (22) which calculates similarity in the resolutional levels based on a predetermined criterion, between a first global topological graph of a first object and a second global topological graph of a second object constructed by the graph generator (18).

17. A shape analyzer (10) **characterised in that** it comprises:

a graph interface which inputs a global topological graph of three-dimensional data representing shape of an object;
a work memory (20) which stores a first global topological graph of a first object and a second global topological graph of a second object input via the graph interface; and
a processor (22) which calculates similarity of the first and second global topological graphs stored in the memory based on a predetermined similarity criterion.

18. The shape analyzer (10) of claim 17 **characterised in that** in order to evaluate the similarity, the processor (22) detects correspondence between elements of the first and the second global topological graphs and calculates degree of matching between the detected corresponding elements.

19. The shape analyzer (10) of claim 18 **characterised in that** the elements include nodes of the first and the second global topological graphs.

20. The shape analyzer (10) of claim 19 **characterised in that** the processor (22) calculates the degree of matching between an attribute of the detected corresponding nodes.

21. The shape analyzer (10) of claim 20 **characterised in that** the attribute is selected such that it becomes insensitive to a predetermined geometric operation on the first and the second global topological graphs.

22. The shape analyzer (10) of claim 21 **characterised in that** the graph is created such that it becomes invariant to rotation.

23. The shape analyzer (10) of claim 17 **characterised in that** the processor (22) calculates the similarity based on an attribute of nodes included in the first and second global topological graphs.

24. The shape analyzer (10) of claim 17 **characterised in that** the processor (22) calculates the similarity based on genus of the first and second global topological graphs.

25. The shape analyzer (10) of claim 17 **characterised in that** the processor (22) calculates the similarity in a plurality of resolutional levels of the first and second global topological graphs.

26. The shape analyzer (10) of claim 25 **characterised in that** the processor (22) calculates the similarity based on an attribute of nodes included in each resolutional level of the first and second global topological graphs.

27. The shape analyzer (10) of claim 25 **characterised in that** the processor (22) calculates the similarity based on genus in each resolutional level of the first and second global topological graphs.

**28.** A shape analyzer (10) **characterised in that** it comprises:

an interface (12) which obtains three-dimensional data representing shape of an object; and
a graph generator (18) which constructs a global topological graph of the object by partitioning the three-dimensional data into a plurality of regions based on values of a Morse function, and by associating the regions with nodes of the graph, wherein the Morse function is invariant to a predetermined geometric operation on the object.

**29.** A shape analysis method **characterised in that** it comprises:

receiving three-dimensional data representing shape of an object;
defining a plurality of points to be processed in the received three-dimensional data;
evaluating Morse values of a Morse function at the defined points, the Morse function being selected such that it becomes invariant to a predetermined geometric operation on the object; and
constructing a global topological graph of the three-dimensional data based on the obtained Morse values.

**30.** The method of claim 29 **characterised in that** it further comprises evaluating similarity based on a predetermined similarity criterion, of a first topological graph of a first object and a second global topological graph of a second object which are constructed.

**31.** The method of claim 29 **characterised in that** a plurality of resolutional levels of the global topological graph of the object are constructed based on topological computation applied to the three-dimensional data.

**32.** The method of claim 31 **characterised in that** it further comprises evaluating based on a predetermined similarity criterion, similarity in the resolutional levels of a first topological graph of a first object and a second global topological graph of a second object, which are constructed.

**33.** A shape analysis method **characterised in that** it comprises:

receiving three-dimensional data representing shape of an object; and
constructing a plurality of resolutional levels of a global topological graph of the object based on topological computation applied to the three-dimensional data.

**34.** The method of claim 33 **characterised in that** a graph at a coarse level of the global topological graph is constructed by coarsely partitioning the object into plural regions and by associating the regions with elements of the graph at the coarse level.

**35.** The method of claim 33 **characterised in that** it further comprises calculating similarity in the resolutional levels based on a predetermined criterion, between a first global topological graph of a first object and a second global topological graph of a second object, which are constructed.

**36.** A shape analysis method **characterised in that** it comprises:

receiving a global topological graph of three-dimensional data representing shape of an object, the graph being created such that it becomes invariant to a predetermined geometric operation;
storing a first global topological graph of a first object and a second global topological graph of a second object received via the interface (12); and
evaluating similarity of the stored first and second global topological graphs based on a predetermined criterion.

**37.** The method of claim 36 **characterised in that** it further comprises, detecting correspondence between elements of the first and the second global topological graphs and calculating degree of matching between the detected corresponding elements, in order to evaluate the similarity.

**38.** The method of claim 36 **characterised in that** the similarity is evaluated in a plurality of resolutional levels of the first and second global topological graphs.

**39.** A shape analysis method **characterised in that** it comprises:

receiving three-dimensional data representing shape of an object;

partitioning the three-dimensional data into a plurality of regions based on values of a Morse function, the Morse function being invariant to a predetermined geometric operation on the object; and

replacing the regions with nodes of a global topological graph, thereby constructing the graph of the object.

40. A network system (100) **characterised in that** it comprises a server (122), a database (124) and at least one user terminal (104,106),

wherein the database (124) is constructed to store information regarding merchandise, global topological graphs of shapes which have been associated with the merchandise, and

wherein the server (122), by accessing the database (124), evaluates with a matching program installed therein, degree of matching of the shapes of the merchandise,

whereby when the user terminal (104,106) electrically informs the server of merchandise a user of the terminal is interested in, the server searches the database seeking other merchandise therein which have a relatively high degree of matching with the informed merchandise and sends information regarding the sought merchandise to the terminal.

41. A computer-readable medium having stored thereon instructions which, when executed by a processor, cause the processor to perform:

receiving three-dimensional data representing shape of an object;

defining a plurality of points to be processed on the received three-dimensional data;

evaluating Morse values of a Morse function at the defined points, the Morse function being selected such that the function becomes invariant to a predetermined geometric operation on the object; and

constructing a global topological graph of the three-dimensional data based on the obtained Morse values.

42. A computer-readable medium having stored thereon processor to perform:

receiving three-dimensional data representing shape of an object; and

constructing a plurality of resolutional levels of a global topological graph of the object based on topological computation of the three-dimensional data.

43. A computer-readable medium having stored thereon instructions which, when executed by a processor, cause the processor to perform:

receiving a global topological graph of three-dimensional data representing shape of an object;

storing a first global topological graph of a first object and a second global topological graph of a second object received via the interface (12); and

evaluating similarity of the stored first and second global topological graphs based on a predetermined criterion.

44. A computer-readable medium having stored thereon instructions which, when executed by a processor, cause the processor to perform:

receiving three-dimensional data representing shape of an object;

partitioning the three-dimensional data into a plurality of regions based on values of a Morse function, the Morse function being invariant to a predetermined geometric operation on the object; and

replacing the regions with nodes of a global topological graph, thereby constructing the graph of the object.

45. A shape analyzer (10) **characterised in that** it comprises:

a graph interface which inputs a global topological graph of three-dimensional data representing shape of an object; and

a processor (22) which calculates similarity of an input first global topological graph and input other global topological graphs of three-dimensional data representing shapes of other objects, and which specifies from the other objects at least one object which is relatively similar to the first object.

46. The shape analyzer (10) of claim 45 **characterised in that** the processor (22) rearranges the other objects based on the similarity calculated with regard to the first object.

47. The shape analyzer (10) of claim 46 **characterised in that** the similarity is displayed on a screen as a value showing degree of similarity.

48. The shape analyzer (10) of claim 45 **characterised in that** scope of the other objects has been limited prior to the similarity calculation, based on a keyword suggesting target objects.

49. A shape analysis method **characterised in that** it comprises:

designating a first object;
preparing a first global topological graph of the first object;
limiting, based on a predetermined criterion, scope of objects to be processed;
preparing global topological graphs of target objects which reside within the scope; and
matching the prepared first topological graph and the prepared global topological graphs of the target objects.

50. The method of claim 49 **characterised in that** limitation of the scope is conducted using text information.

51. A shape analysis method **characterised in that** it comprises:

preparing shape-based information of a plurality of objects;
specifying text-based information to limit scope of the objects for matching; and
determining objects which are similar to each other from results of the matching conducted based on the shape-based information, from among the objects which reside within the limited scope.

F i g. 1

Object

Reeb Graph

$r_0^a$

$S_{0,0}^a$

$\Pi_{0,0}^a$

$r_0^b$

$r_1^b$

$S_{0,0}^b$

$S_{1,0}^b$

$S_{1,1}^b$

$\Pi_{0,0}^b$

$\Pi_{1,0}^b$

$\Pi_{1,1}^b$

$r_0^c$

$r_1^c$

$r_2^c$

$r_3^c$

$S_{0,0}^c$

$S_{1,0}^c$

$S_{1,1}^c$

$S_{2,0}^c$

$S_{2,1}^c$

$S_{2,2}^c$

$S_{3,0}^c$

$S_{3,1}^c$

$\Pi_{0,0}^c$

$\Pi_{1,0}^c$

$\Pi_{1,1}^c$

$\Pi_{2,0}^c$

$\Pi_{2,1}^c$

$\Pi_{2,2}^c$

$\Pi_{3,0}^c$

$\Pi_{3,1}^c$

Fig. 2a

Fig. 2b

Fig. 2c

EP 1 158 454 A2

F i g. 3 a

F i g. 3 b

Fig. 4a

Fig. 4b

F i g. 5 a

F i g. 5 b

F i g. 5 c

F i g. 5 d

Fig. 6b

Fig. 6a

**Step 1**:
Select a base vertex $p$, and set $gdist_p(p) = 0$ where $gdist_p(v)$ represents the geodesic distance on $v$ from $p$.

**Step 2**:
Insert $p$ into the vertex list $l$ in which the vertices are sorted by $gdist_p(v)$.

**Step 3**:
Let the current processing vertex $v_c$ be the one whose geodesic distance is the smallest in $l$ and remove it from $l$.

**Step 4**:
Calculate the adjacent vertices
$v_{v_c} = (v_{c_0}, v_{c_1}, ...)$ where each $v_{c_i}$ is the other vertex of of an edge $e_{c_i}$ which connects to $v_c$.

**Step 5**:
Calculate the temporary geodesic distance
$gtemp_p(v_{c_i}) = gdist_p(v_c) + length(e_{c_i})$ on each $v_{c_i}$. $length(e_{c_i})$ represents the length property of the $e_{c_i}$.

**Step 6**:
On each $v_{c_i}$, if a geodesic distance has not yet been assigned, set the value $gdist_p(v_{c_i}) = gtemp_p(v_{c_i})$, and insert $v_{c_i}$ to $l$, otherwise, only reassign $gdist_p(v_{c_i}) = gtemp_p(v_{c_i})$, and reinsert $v_{c_i}$ to $l$ when $gdist_p(v_{c_i}) > gtemp_p(v_{c_i})$.

**Step 7**:
Finish the procedure if $l$ is empty. Otherwise, go to Step 3.

## Fig. 7

Fig. 8a

Fig. 8b

Fig. 8c

Fig. 8d

Fig. 9b

Fig. 9a

Fig. 10 a    Fig. 10 b

Step 1:
Calculate $g_1(l)$ and $g_2(l)$ which represent the genuses
at each level $l$ of two MRG $R_1$ and $R_2$ respectively (Figure 12(a)).
Step 2:
Calculate the difference of genus at each level by $g'_*(l) = g_*(l) - g_*(l-1)$ (Figure 12(b)).

Step 3:
Initialize genus difference pairs $(\Delta^1_*(l), \Delta^2_*(l)) = (g'_*(l), g'_*(l))$ (Figure 12(c)).

Step 4:
Search for the coarsest level $l_x$ at which $\Delta^1_x(l_x) \neq 0$ (Figure 12(d)). If there is no $l_x$, go to Step 8.

Step 5:
Search for the coarsest level $l_y$ at which $\Delta^1_y(l_y) \neq 0$ and $x \neq y$ (Figure 12(e)). If there is no $l_y$, go to Step 8.

Step 6:
Let $\delta_{l_x,l_y} = \min(\Delta^1_x(l_x), \Delta^1_y(l_y))$ and update difference pairs as follows (Figure 12(f)).

$$(\Delta^1_x(l_x), \Delta^2_x(l_x)) = (\Delta^1_x(l_x) - \delta_{l_x,l_y}, \Delta^2_x(l_x) - \delta_{l_x,l_y} 0.5^{\max(0,l_y-l_x-1)})$$

$$(\Delta^1_y(l_y), \Delta^2_y(l_y)) = (\Delta^1_y(l_y) - \delta_{l_x,l_y}, \Delta^2_y(l_y) - \delta_{l_x,l_y})$$

Step 7:
If $\Delta^1_x(l_x) = 0$, go to Step 4, otherwise, go to Step 5.

Step 8:
Calculate $\Delta(l) = \Delta^2_1(l) + \Delta^2_2(l)$ at each level $l$ (Figure 12(g) → (h)).

# Fig. 11

| I | 0 | 1 | 2 | 3 | 4 |
|---|---|---|---|---|---|
| $g_1$ | 0 | 0 | 4 | 5 | 5 |
| $g_2$ | 0 | 0 | 2 | 3 | 6 |

Fig. 12a

| I | 0 | 1 | 2 | 3 | 4 |
|---|---|---|---|---|---|
| $g_1$ | 0 | 0 | 4 | 1 | 0 |
| $g_2$ | 0 | 0 | 2 | 1 | 3 |

Fig. 12b

| I | 0 | 1 | 2 | 3 | 4 |
|---|---|---|---|---|---|
| $\Delta_1$ | (0,0) | (0,0) | (4,4) | (1,1) | (0,0) |
| $\Delta_2$ | (0,0) | (0,0) | (2,2) | (1,1) | (3,3) |

Fig. 12c

| I | 0 | 1 | 2 | 3 | 4 |
|---|---|---|---|---|---|
| $\Delta_1$ | (0,0) | (0,0) | (4,4) | (1,1) | (0,0) |
| $\Delta_2$ | (0,0) | (0,0) | (2,2) | (1,1) | (3,3) |

Fig. 12d

| I | 0 | 1 | 2 | 3 | 4 |
|---|---|---|---|---|---|
| $\Delta_1$ | (0,0) | (0,0) | (4,4) | (1,1) | (0,0) |
| $\Delta_2$ | (0,0) | (0,0) | (2,2) | (1,1) | (3,3) |

Fig. 12e

| I | 0 | 1 | 2 | 3 | 4 |
|---|---|---|---|---|---|
| $\Delta_1$ | (0,0) | (0,0) | (2,2) | (1,1) | (0,0) |
| $\Delta_2$ | (0,0) | (0,0) | (0,0) | (1,1) | (3,3) |

Fig. 12f

| I | 0 | 1 | 2 | 3 | 4 |
|---|---|---|---|---|---|
| $\Delta_1$ | (0,0) | (0,0) | (0,0.5) | (0,0) | (0,0) |
| $\Delta_2$ | (0,0) | (0,0) | (0,0) | (0,0) | (0,1) |

Fig. 12g

| I | 0 | 1 | 2 | 3 | 4 |
|---|---|---|---|---|---|
| $\Delta$ | 0 | 0 | 0.5 | 0 | 1 |

Fig. 12h

Fig. 13a

Fig. 13b

Fig. 13c

Fig. 13d

Fig. 13e

Fig. 13f

|     | #(vertex) | (a)  | (b)  | (c)  | (d)  | (e)  | (f)  |
|-----|-----------|------|------|------|------|------|------|
| (a) | 13846     | **1.00** | **0.99** | 0.52 | 0.53 | 0.52 | 0.52 |
| (b) | 13846     | **0.99** | **1.00** | 0.52 | 0.53 | 0.53 | 0.52 |
| (c) | 8192      | 0.52 | 0.52 | **1.00** | **0.99** | 0.33 | 0.33 |
| (d) | 512       | 0.53 | 0.53 | **0.99** | **1.00** | 0.33 | 0.33 |
| (e) | 7539      | 0.52 | 0.53 | 0.33 | 0.33 | **1.00** | **0.95** |
| (f) | 4704      | 0.52 | 0.52 | 0.33 | 0.33 | **0.95** | **1.00** |

F i g.  1 4

| key | searched objects | | | |
|-----|---|---|---|---|
| 1.00 | 0.86 | 0.82 | 0.80 | 0.79 |
| 1.00 | 0.74 | 0.73 | 0.70 | 0.70 |
| 1.00 | 0.96 | 0.87 | 0.87 | 0.84 |
| 1.00 | 0.84 | 0.82 | 0.76 | 0.72 |
| 1.00 | 0.85 | 0.76 | 0.55 | 0.54 |

Fig. 15

Fig. 16

Fig. 17

EP 1 158 454 A2